# FASCICULE DE BREVET EUROPEEN

(11) **EP 2 599 287 B1**
(45) Date de publication et mention de la délivrance du brevet: **16.03.2016**
(21) Numéro de dépôt: 11735454.8
(22) Date de dépôt: 25.07.2011
(51) Int. Cl.: G10L 21/0216, H04M 1/03, H04M 1/04, H04M 1/60

(54) **TERMINAL DE COMMUNICATION MAINS LIBRES A ACOUSTIQUE AMELIOREE**
FREIHÄNDIGES KOMMUNIKATIONSENDGERÄT MIT VERBESSERTER AKUSTIK
HANDS-FREE COMMUNICATION TERMINAL WITH IMPROVED ACOUSTICS

(30) Priorité: 26.07.2010 FR 1056118
(43) Date de publication de la demande: 05.06.2013
(73) Titulaire: Sagemcom Broadband SAS, 92500 Rueil Malmaison (FR)
(72) Inventeur: BOURGOIN, Gilles, F-92500 Rueil Malmaison (FR)
(74) Mandataire: Lavialle, Bruno François Stéphane
(86) Numéro de dépôt international: PCT/EP2011/062766
(87) Numéro de publication internationale: WO 2012/013639

(56) Documents cités:
- GB-A- 2 401 278
- US-A- 5 323 458
- US-A1- 2006 147 063
- US-A1- 2009 052 697

## Description

L'invention est relative à un terminal de communication utilisable notamment dans le domaine de la téléphonie plus particulièrement pour la transmission de la voix.

### ARRIERE-PLAN DE L'INVENTION

Les téléphones comportent le plus souvent une fonction mains libres qui permet à l'utilisateur de poser le téléphone sur une table et de parler sans avoir à tenir le combiné en main.

Au contraire de l'utilisation conventionnelle du téléphone dans laquelle le microphone est placé devant la bouche, l'éloignement du microphone dans son utilisation en mains libres engendre une déformation des voix et une perte de la qualité du signal.

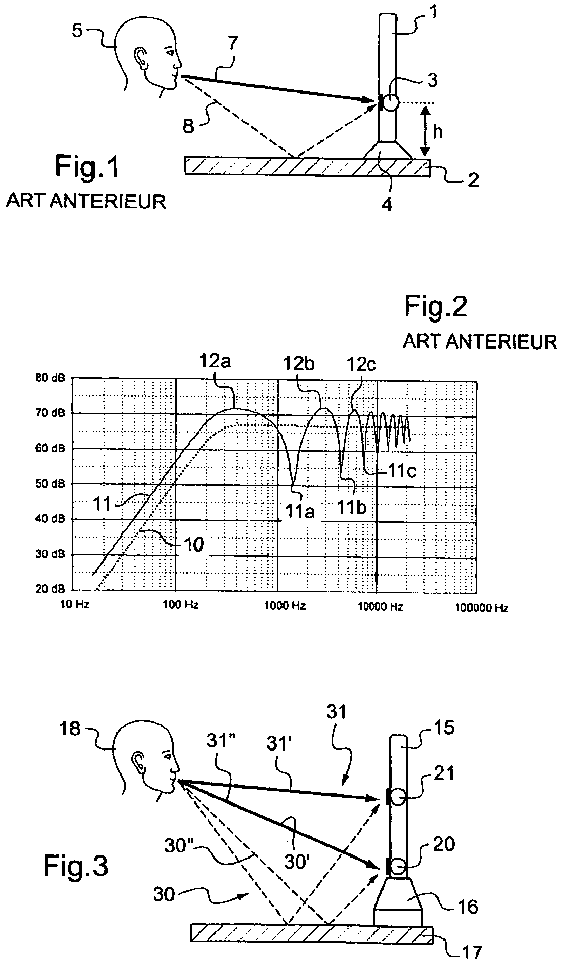

La figure 1 illustre un exemple d'utilisation d'un téléphone en mains libres. Le téléphone 1, ici un téléphone résidentiel, est placé sur un support 4 posé sur une surface 2 plane et horizontale comme une table. Le téléphone 1 comporte un microphone 3 situé à une hauteur h de la surface 2 dont la fonction est de convertir les ondes sonores en un signal électrique représentatif des ondes sonores. Le support 4 permet, par exemple dans le cas d'un téléphone sans fil, de recharger la batterie du téléphone et de maintenir celui-ci vertical.

L'utilisateur fait face au téléphone 1 et au microphone 3 et converse avec son interlocuteur. Un premier groupe d'ondes sonores symbolisé par la flèche 7 suit une trajectoire directe entre l'utilisateur 5 et le microphone 3. Un second groupe d'ondes sonores symbolisé par la flèche 8 est d'abord réfléchi par la table 2 avant d'atteindre le microphone 3.

La distance parcourue par le second groupe d'ondes 8 est donc plus importante que la distance parcourue par le premier groupe d'ondes 7.

La figure 2 illustre des courbes représentant les signaux de réponse du microphone 3 aux ondes sonores avec en abscisse la fréquence en hertz (échelle logarithmique) et en ordonnée le gain en décibel.

La courbe 10 de la figure 2 illustre la réponse du microphone à un groupe d'ondes sonores parvenu directement au microphone, sans réflexion. Le gain est constant à partir d'une fréquence de 300 Hz, c'est-à-dire que le microphone convertit en signal, sans perturbations, la gamme complète des fréquences émises par un être humain.

La courbe 11 illustre en revanche la réponse du microphone aux ondes sonores directes 7 et aux ondes sonores réfléchies 8. La courbe, à partir de 300 Hz, est en forme de peigne, avec une amplitude de plus de 20 dB et un niveau maximum supérieur de 6 dB à la courbe 10. Cette courbe 11 comporte en particulier des noeuds (11 a, 11 b, 11c...) correspondant à des fréquences pour lesquelles le signal est particulièrement faible et des pics (12a, 12b, 12c...) correspondant à des amplifications du signal. Autrement dit, le microphone 3 ne restitue pas correctement certaines fréquences de la voix humaine, soit en les affaiblissant, soit en les amplifiant, ce qui nuit particulièrement à la conversation.

Ceci met en évidence le fait que lorsqu'une surface réfléchissante, comme une table, renvoie une partie des ondes sonores émises par l'utilisateur, le microphone convertit les ondes sonores en un signal très perturbé, ce qui dégrade fortement la qualité du son.

Ce phénomène est bien connu. En particulier, il est connu que, plus la hauteur h entre le microphone 3 et la surface 2 est importante, plus les perturbations seront importantes.

Pour résoudre ce problème, il est également connu de placer le microphone le plus proche possible de la surface.

Dans le cas d'un téléphone résidentiel reposant sur un support 4, la hauteur h est au moins égale à la hauteur du support 4. Le microphone 3 ne peut donc être placé suffisamment près de la surface 4 pour éviter d'obtenir une courbe de réponse perturbée.

Il est connu des documents US2006/147063, US5323458 et GB2401278 un terminal comportant une unité de traitement reliée à un organe acoustique principal et à au moins un organe acoustique secondaire qui sont agencés pour transmettre chacun un signal à l'unité de traitement, le terminal étant agencé pour émettre un signal téléphonique résultant de la somme des signaux de l'organe acoustique principal et de l'organe acoustique secondaire.

### OBJET DE L'INVENTION

L'invention vise à proposer un terminal de communication remédiant au moins partiellement aux défauts énoncés ci-dessus.

### BREVE DESCRIPTION DE L'INVENTION

En vue de la réalisation de ce but, il est prévu, selon l'invention, un terminal comportant une unité de traitement reliée à un organe acoustique principal et à au moins un organe acoustique secondaire qui sont agencés pour transmettre chacun un signal à l'unité de traitement, le terminal étant agencé pour émettre un signal téléphonique résultant de la somme des signaux de l'organe acoustique principal et de l'organe acoustique secondaire, le terminal comportant des moyens pour reposer, sur une surface horizontale, dans une position sensiblement verticale, les organes acoustiques étant disposés de telle manière que l'organe acoustique secondaire ait son débouché à une hauteur supérieure à la hauteur du débouché de l'organe acoustique principal par rapport à la surface. La hauteur du débouché de l'organe acoustique secondaire par rapport à la surface est sensiblement égale à un multiple de deux fois la hauteur du débouché de l'organe acoustique principal par rapport à la surface.

Ainsi, le signal délivré comporte moins de perturbations et la voix est transmise de façon particulièrement fidèle. En effet, les organes acoustiques étant décalés l'un par rapport à l'autre, les signaux provenant de chaque organe acoustique présentent des perturbations ou atténuations qui sont décalées les unes par rapport aux autres de sorte que la sommation permet de compenser au moins partiellement lesdites perturbations ou atténuations. Le signal résultant est donc moins perturbé.

Avantageusement, l'organe acoustique secondaire a son débouché à une hauteur comprise entre 3,8 et 4,2 fois la hauteur du débouché de l'organe acoustique principal par rapport à la surface.

Ce positionnement des organes acoustiques permet de minimiser les perturbations sur une bande de fréquences correspondant à la bande de fréquence utilisée par le téléphone.

### BREVE DESCRIPTION DES DESSINS

L'invention sera mieux comprise à la lumière de la description qui suit d'un mode de réalisation particulier non limitatif de l'invention.

Il sera fait référence aux figures annexées, données à titre d'exemple, parmi lesquelles :
- la figure 1, déjà détaillée, illustre le fonctionnement d'un téléphone selon l'art antérieur ;
- la figure 2, déjà détaillée, illustre des courbes de réponse du microphone aux ondes sonores selon l'art antérieur ;
- la figure 3 est une vue schématique d'un téléphone selon l'invention, en cours d'utilisation en mode mains libres ;
- la figure 4 illustre la courbe de réponse du microphone principal à une onde sonore d'un téléphone tel qu'illustré en figure 3 ;
- la figure 5 illustre la courbe de réponse du microphone secondaire à une onde sonore d'un téléphone tel qu'illustré en figure 3 ;
- la figure 6 illustre la courbe de réponse correspondant à la somme des signaux du microphone principal et du microphone secondaire d'un téléphone tel qu'illustré en figure 3 ;
- la figure 7 illustre un schéma de positionnement du téléphone selon l'invention par rapport à l'utilisateur ;
- la figure 8 illustre une courbe de réponse correspondant à la somme des signaux du microphone principal et du microphone secondaire selon une variante de l'invention,
- la figure 9 illustre un schéma fonctionnel d'une portion d'une unité de traitement des signaux microphone principal et du microphone secondaire.

### DESCRIPTION DETAILLEE DE L'INVENTION

En référence à la figure 3 et selon l'invention, le téléphone 15 comprend de façon connue en elle-même un boîtier ayant une face avant et renfermant une unité de traitement reliée à un accumulateur électrique, à un microphone principal 20 débouchant à une extrémité de la face avant (l'extrémité inférieure lorsque le téléphone est en position d'utilisation) et à un haut-parleur débouchant sur une extrémité opposée de la face avant (l'extrémité supérieure). L'unité de traitement est agencée pour se connecter au réseau téléphonique et pour émettre et recevoir des signaux téléphoniques comprenant au moins des signaux de voix. L'accumulateur est ici disposé en partie inférieure du téléphone et est relié à un connecteur permettant son rechargement lorsque le téléphone est posé sur un support 16 pourvu d'un connecteur correspondant relié au réseau de distribution électrique.

Conformément à l'invention, le téléphone comporte en outre un microphone secondaire 21 débouchant sur la face avant selon une direction ou orientation sensiblement identique à celle du microphone principal 20. Le microphone principal 20, délivre un signal principal et le microphone secondaire 21 délivre un signal secondaire à l'unité de traitement.

Sur la figure 3, le téléphone 15 est placé sur son support 16 posé sur une surface 17 plane et horizontale comme une table. Le microphone principal 20 est situé à une hauteur H1 de la surface 17 et le microphone secondaire 21 à une hauteur H2 par rapport à la surface 17. La hauteur H2 est supérieure à la hauteur H1.

L'utilisateur 18 est situé face au téléphone 15, au microphone principal 20 et au microphone secondaire 21, qui sont disposés sur la même face du téléphone et orientés selon la même direction. L'utilisateur 18, lors de sa conversation, émet des ondes sonores en direction du téléphone dont :
- un groupe d'ondes principal 30, capté par le microphone principal 20 et comportant un premier groupe d'ondes directes 30' et un premier groupe d'ondes réfléchies 30" ;
- un groupe d'ondes secondaire 31, capté par le microphone secondaire 21 et comportant un second groupe d'ondes directes 31' et un second groupe d'ondes réfléchies 31 ".

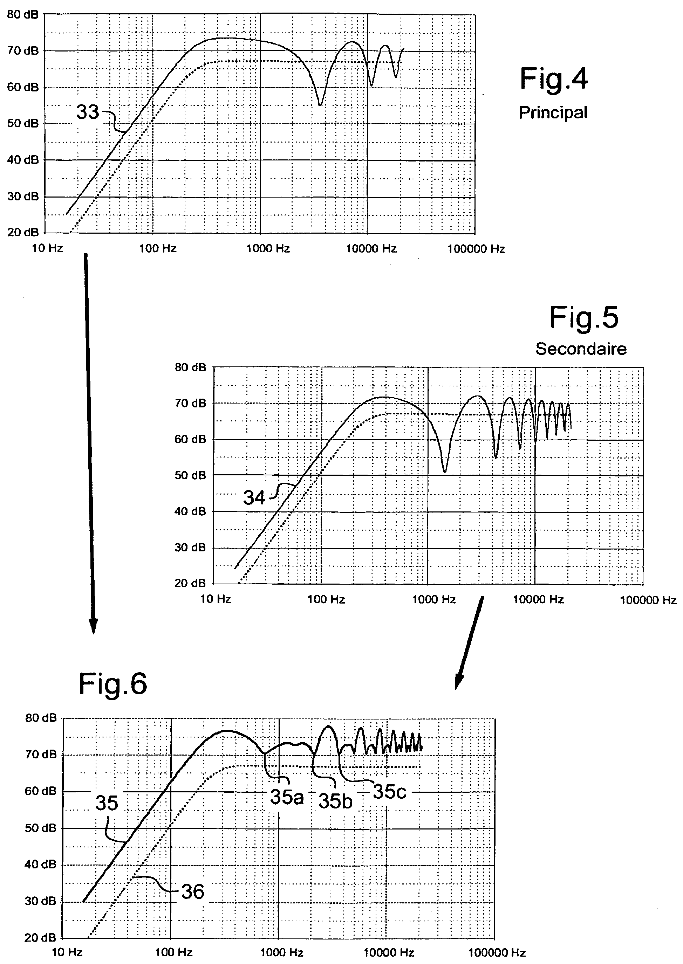

Les figures 4 et 5 illustrent respectivement des courbes 33 et 34 correspondant aux signaux de réponse du microphone principal 20 et du microphone secondaire 21 aux groupes d'ondes principales 30 et secondaires 31. Conformément à l'art antérieur, chaque courbe présente un profil en peigne, perturbé, avec de fortes variations d'amplitude supérieures à 20 dB. Toutefois, les courbes ne sont pas identiques, car les microphones 20 et 21 sont disposés à distance l'un de l'autre, ce qui induit un décalage dans les signaux.

La figure 6 illustre une courbe 35 représentant un signal résultant qui est la somme du signal principal du microphone principal 20 et du signal secondaire du microphone secondaire 21. La courbe 35 comporte des noeuds (35a, 35b, 35c) dont le noeud 35a pour lequel le gain est de sensiblement 70 dB. Cette valeur est à comparer au noeud 11a de la figure 2 dont le gain est de sensiblement 50 dB. De manière générale, l'amplitude maximale de la courbe 35 est de 8 dB, à comparer avec l'amplitude maximale de la courbe 11 qui est de sensiblement 20 dB. La courbe 35 illustre le fait que le signal résultant de la somme des signaux des microphones 20 et 21 est moins perturbé et se rapproche du signal idéal illustré par la courbe 10 en figure 1.

Ainsi, ajouter le signal issu du microphone secondaire 21 au signal issu du microphone principal permet d'atténuer les perturbations du microphone principal dues à la réflexion des ondes sonores sur la surface.

La position du microphone secondaire 21 influe directement sur le signal résultant. Il est en particulier intéressant que les fréquences des noeuds du signal du microphone secondaire soient en opposition avec les fréquences des noeuds du signal du microphone principal 20.

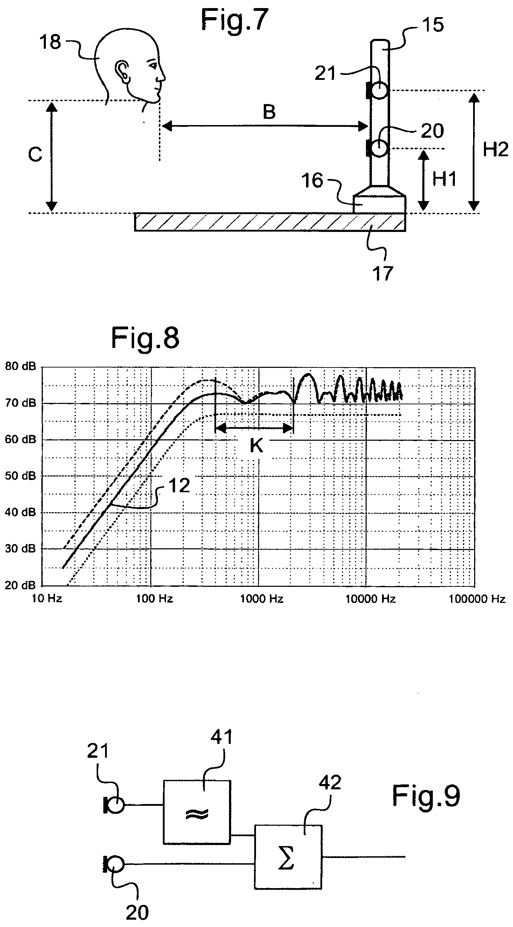

La figure 7 illustre un schéma positionnant les différents éléments les uns par rapport aux autres et notamment :
- l'utilisateur est situé à une hauteur C de la table et à une distance B des microphones 20 et 21, ces derniers étant situés dans le même plan ;
- le microphone principal est situé à une hauteur H1 de la table et le microphone secondaire à une hauteur H2 de la table.

Les fréquences des noeuds des signaux issus des microphones peuvent être calculé par la formule (a) : Fréquence noeud = (2.n-1).c/{[(C+H)²+B²]^{0,5}-[(cH)²+B²]}/2, dans laquelle c est la célérité du son et n l'indice de chaque noeud (n variant de 1 au nombre maximal de noeuds considérés).

Pour garantir un bon fonctionnement du dispositif, il convient que les fréquences des noeuds du microphone principal et du microphone secondaire soient différentes. Cette condition et le fait que l'utilisateur soit situé à bonne distance du téléphone, ce qui implique que les dimensions B et C sont importantes (>200 mm), permet de déduire de la formule précédente la condition simplifiée suivante (b) : H2# (2.n+1).H1.

Pour obtenir des conditions idéales, les fréquences des noeuds doivent être décalées, ce qui conduit à la relation simplifiée (c) : 1,9.n.H1 ≤ H2 ≤ 2,1.n.H1.

En pratique, le téléphone est utilisé pour transporter la voix humaine dont les fréquences se situent entre 100Hz et 10 kHz. La bande de fréquences utile pour un téléphone analogique est située entre 300 Hz et 3,3 kHz. Or le second noeud du signal, illustré par exemple en figure 2 sous la référence 11 b, est situé sensiblement autour de 2 kHz, soit sensiblement la valeur moyenne de la bande de fréquences utile. Avantageusement, il convient donc de disposer les microphones 20 et 21 pour que la valeur du gain de ce second noeud soit maximum afin d'obtenir le minimum de perturbation dans la bande de fréquences utile.

Rapporté à la formule (c), on en déduit que 3,8.H1 ≤ H2 ≤ 4,2.H1.

Ainsi, il est particulièrement avantageux que le second microphone 21 soit placé à une hauteur comprise entre 3,8 et 4,2 fois la hauteur séparant le microphone principal 20 de la surface 17 et de préférence égale à quatre fois cette hauteur.

Dans une variante de réalisation de l'invention, il convient de filtrer le signal issu du microphone secondaire 21 avant qu'il soit sommé avec le signal issu du microphone principal 20 comme illustré par la figure 9.

Pour améliorer le signal dans la bande de fréquences utile, c'est-à-dire entre 300 Hz et 3,3 kHz, il est avantageux d'appliquer au signal issu du microphone secondaire 21, un filtre passe-haut 41 du premier ordre à 2 kHz qui permet de ne laisser passer que les fréquences utiles à l'optimisation de la bande de fréquence utile. Un sommateur 42 permet de sommer les signaux provenant du microphone secondaire 21 et du microphone principal 20. La figure 8 illustre une courbe 40 représentant le signal transmis par un téléphone selon cette variante. La courbe illustre une plage de fonctionnement K dans laquelle l'amplitude du signal est de 3 dB.

Le téléphone selon l'invention est destiné à être utilisé en particulier dans une position verticale, c'est à dire posé perpendiculairement par rapport à une surface. Toutefois, l'utilisateur pourra poser le combiné à plat sur la surface pour faciliter son utilisation. Dans cette position, les ondes sonores ne sont pas réfléchies par la surface et par conséquent, un microphone secondaire n'est pas utile. Ce dernier pourrait même être source de perturbations en créant un décalage entre les signaux issus de chaque microphone. Pour pallier cet inconvénient, le téléphone pourra comporter des moyens de désactivation du microphone secondaire. Les moyens de désactivation pouvant être manuels, manoeuvrés par l'utilisateur, ou automatiques, par exemple contrôlés par un accéléromètre permettant de déterminer l'inclinaison du téléphone.

L'invention décrite n'est en outre pas limitée au mode de réalisation particulier illustré par la description.

En particulier, le terminal peut revêtir la forme d'un équipement électronique multimédia tel une tablette multimédia, un téléphone mobile multimédia ou un terminal de communication informatique.

Les microphones peuvent déboucher sur la même face ou des faces différentes du terminal.

Le microphone secondaire 21 peut être remplacé par un microphone secondaire omnidirectionnel disposé sur une autre face que celle comprenant le microphone principal 20 et orienté selon une direction différente. En effet, les microphones omnidirectionnels permettent de capter les sons provenant de différentes directions sans qu'il soit nécessaire de les orienter selon la provenance des sons. Ainsi, il est possible de disposer de tels microphones secondaires indépendamment de la position du microphone principal.

Il en est de même pour le (ou les) haut parleur qui peut être disposé sur l'une des faces quelconque du terminal.

Les microphones peuvent délivrer un signal numérique ou analogique, la sommation et le filtre passe-haut se faisant alors respectivement par un calculateur ou par des filtres électroniques connus.

La sommation des signaux peut être réalisée de différentes manières. De manière connue, on pourra utiliser des sommateurs électroniques ou numériques suivant les signaux. On pourra également réaliser une sommation simple en reliant les câbles électriques des microphones.

Il est également possible de réaliser une sommation mécanique des ondes acoustiques. Selon cet agencement particulier, le téléphone comporte un pavillon principal, prolongé par un conduit principal débouchant sur un microphone commun et un pavillon secondaire, prolongé par un conduit secondaire débouchant sur le microphone commun. Les conduits débouchant sur le même microphone permettent une sommation mécanique des ondes acoustiques recueillies par les pavillons.

Le nombre de microphones utilisables n'est pas limité à deux comme dans l'exemple donné. Il est envisagé que le téléphone comporte plusieurs microphones principaux, chacun associé à un microphone secondaire placé au dessus. Chaque couple de microphones est situé sur une face différente du téléphone. Cette configuration est particulièrement intéressante pour un téléphone installé dans une salle de réunion destinée à recevoir plusieurs utilisateurs simultanément.

Enfin, le signal résultant de la somme des signaux du microphone principal et du microphone secondaire peut faire l'objet de traitements du signal tels une amplification, un filtrage des bruits de fond ou une modulation de fréquence avant son émission vers un terminal de réception.

## Revendications

1. Terminal (1) comportant une unité de traitement reliée à un organe acoustique principal (20) et à au moins un organe acoustique secondaire (21) qui sont agencés pour transmettre chacun un signal à l'unité de traitement, le terminal (1) étant agencé pour émettre un signal téléphonique résultant de la somme des signaux de l'organe acoustique principal (20) et de l'organe acoustique secondaire (21), le terminal comportant des moyens pour reposer (4, 16), sur une surface horizontale (2, 17), dans une position sensiblement verticale, les organes acoustiques (20, 21) étant disposés de telle manière que l'organe acoustique secondaire (21) ait son débouché à une hauteur (H2) supérieure à la hauteur (H1) du débouché de l'organe acoustique principal (20) par rapport à la surface (2, 17), **caractérisé en ce que** la hauteur (H2) du débouché de l'organe acoustique secondaire (21) par rapport à la surface (2, 17) est sensiblement égale à un multiple de deux fois la hauteur (H1) du débouché de l'organe acoustique principal (20) par rapport à la surface (2, 17).

2. Terminal selon la revendication 1, dans lequel l'organe acoustique principal (20) et l'organe acoustique secondaire débouchent sensiblement selon une même direction sur une même face du terminal.

3. Terminal selon la revendication 1, dans lequel l'organe acoustique principal (20) et l'organe acoustique secondaire (21) sont des microphones.

4. Terminal selon la revendication 1, dans lequel la hauteur (H2) de l'organe acoustique secondaire (21) comprise entre 3,8 et 4,2 fois la hauteur (H1) de l'organe acoustique principal (20) par rapport à la surface (2, 17).

5. Terminal selon la revendication 3, dans lequel l'unité de traitement comprend un filtre passe-haut pour filtrer le signal du microphone secondaire (21) avant que celui-ci ne soit sommé avec le signal du microphone principal (20).

6. Terminal selon l'une quelconque des revendications 1 à 5, comportant des moyens de désactivation de l'organe acoustique secondaire (21).

## Patentansprüche

1. Endgerät (1), umfassend eine Verarbeitungseinheit, die mit einem Hauptakustikorgan (20) und mit mindestens einem Nebenakustikorgan (21) verbunden ist, die so ausgebildet sind, dass sie jeweils ein Signal an die Verarbeitungseinheit übertragen, wobei das Endgerät (1) so ausgebildet ist, dass es ein Telefonsignal aussendet, das aus der Summe der Signale des Hauptakustikorgans (20) und des Nebenakustikorgans (21) resultiert, wobei das Endgerät Mittel umfasst, um auf einer horizontalen Oberfläche (2, 17) in einer im Wesentlichen vertikalen Position zu stehen (4, 16), wobei die Akustikorgane (20, 21) derart angeordnet sind, dass das Nebenakustikorgan (21) seinen Ausgang auf einer Höhe (H2) hat, die bezogen auf die Oberfläche (2, 17) über der Höhe (H1) des Ausgangs des Hauptakustikorgans (20) ist, **dadurch gekennzeichnet, dass** die Höhe (H2) des Ausgangs des Nebenakustikorgans (21) bezogen auf die Oberfläche (2, 17) im Wesentlichen gleich einem Vielfachen der zweifachen Höhe (H1) des Ausgangs des Hauptakustikorgans (20) bezogen auf die Oberfläche (2, 17) ist.

2. Endgerät nach Anspruch 1, wobei das Hauptakustikorgan (20) und das Nebenakustikorgan im Wesentlichen in eine gleiche Richtung auf einer gleichen Seite des Endgeräts münden.

3. Endgerät nach Anspruch 1, wobei das Hauptakustikorgan (20) und das Nebenakustikorgan (21) Mikrophone sind.

4. Endgerät nach Anspruch 1, wobei die Höhe (H2) des Nebenakustikorgans (21) zwischen dem 3,8 und 4,2-fachen der Höhe (H1) des Hauptakustikorgans (20) bezogen auf die Oberfläche (2, 17) beträgt.

5. Endgerät nach Anspruch 3, wobei die Verarbeitungseinheit ein Hochpassfilter umfasst, um das Signal des Nebenmikrophons (21) zu filtern, ehe dieses mit dem Signal des Hauptmikrophons (20) summiert wird.

6. Endgerät nach einem der Ansprüche 1 bis 5, umfassend Mittel zum Deaktivieren des Nebenakustikorgans (21).

## Claims

1. A terminal (1) comprising a processing unit connected to a main acoustic member (20) and to at least one secondary acoustic member (21), each of which members is arranged to transmit a signal to the processor unit, the terminal (1) being arranged to deliver a telephone signal resulting from the sum of the signals from the main acoustic member (20) and from the secondary acoustic member (21), the terminal including stand means (4, 16) for standing on a horizontal surface (2, 17) in a substantially vertical position, the acoustic members (20, 21) being arranged in such a manner that the secondary acoustic member (21) has its opening at a height (H2) that is greater than the height (H1) of the opening of the main acoustic member (20) relative to the surface (2, 17), the terminal being **characterized in that** the height (H2) of the opening of the secondary acoustic member (21) relative to the surface (2, 17) is substantially equal to a multiple of twice the height (H1) of the opening of the main acoustic member (20) relative to the surface (2, 17).

2. A terminal according to claim 1, wherein the main acoustic member (20) and the secondary acoustic member are both open in substantially the same direction in a common face of the terminal.

3. A terminal according to claim 1, wherein the main acoustic member (20) and the secondary acoustic member (21) are microphones.

4. A terminal according to claim 1, wherein the height (H2) of the secondary acoustic member (21) lies in the range 3.8 to 4.2 times the height (H1) of the main acoustic member (20) relative to the surface (2, 17).

5. A terminal according to claim 3, wherein the processor unit includes a highpass filter for filtering the signal from the secondary microphone (21) before it is summed with the signal from the main microphone (20).

6. A terminal according to any one of claims 1 to 5, including means for deactivating the second acoustic member (21).
